# EUROPÄISCHE PATENTANMELDUNG

(11) **EP 4 431 286 A1**
(43) Veröffentlichungstag der Anmeldung: **18.09.2024**
(21) Anmeldenummer: 23161778.8
(22) Anmeldetag: 14.03.2023
(51) Int. Cl.: B41J 2/045

(54) **VERFAHREN ZUM ANALYSIEREN EINES DRUCKKOPFES**

(71) Anmelder: Ivoclar Vivadent AG, 9494 Schaan (LI)
(72) Erfinder: Bitar, Nicola, 9462 Montlingen (CH); Reinhardt, Jonas, 7206 Igis (CH); Niedrig, Christian, 9478 Azmoos (CH); Renner, Johannes, 3072 Ostermundingen (AT)
(74) Vertreter: Baldus, Oliver

(57) **Zusammenfassung**

Die vorliegende Erfindung betrifft ein Verfahren zum Analysieren eines Druckkopfes (103), mit den Schritten eines Ansteuerns (S101) eines Piezoelementes innerhalb des Druckkopfes mit einer Folge von Spannungsprofilen; und eines Erfassens (S102) eines Schallpegels, eines Stromflusses, eines Widerstandes, einer Impedanz und/oder einer Temperatur des Druckkopfes während des Ansteuerns.

## Beschreibung

Die vorliegende Erfindung betrifft ein Verfahren zum Analysieren eines Druckkopfes und eine Druckvorrichtung zum Durchführen des Verfahrens.

Es ist die technische Aufgabe der vorliegenden Erfindung, den Zustand eines Druckkopfes oder einer Druckflüssigkeit in einer Druckvorrichtung zu erfassen.

Diese Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum Analysieren eines Druckkopfes gelöst, mit den Schritten eines Ansteuerns eines Piezoelementes innerhalb des Druckkopfes mit einer Folge von Spannungsprofilen; und eines Erfassens eines Schallpegels, eines Stromflusses, eines Widerstandes, einer Impedanz und/oder einer Temperatur des Druckkopfes während des Ansteuerns. Der Stromfluss ist beispielsweise der gemittelte elektrische Stromwert über ein Spannungsprofil. Durch das Ansteuern der Piezoelemente und gleichzeitigem Messen (Sensing) der Leistungsaufnahme oder der Akustik können Parameter des Druckkopfes und des Fluidsystems ermittelt werden, wie beispielsweise ein Blindwiderstand, eine Alterung des Druckkopfes. Zudem können eine Durchflussrate durch den Druckkopf, eine Viskosität der Flüssigkeit im Druckkopf oder, eine Alterung oder Veränderung der Druckflüssigkeit, oder ein Ablösen der Düsenplatte bestimmt werden.

In einer technisch vorteilhaften Ausführungsform des Verfahrens wird eine Fehlfunktion der Druckdüse erfasst, wenn der erfasste Schallpegel, der Stromfluss oder die Temperatur über einem vorgegebenen Wert liegt. Dadurch wird beispielsweise der technische Vorteil erreicht, dass eine Fehlfunktion durch beispielsweise eine Verstopfung, Lufteinschlüsse in der Flüssigkeit, eine Verdichtung der Flüssigkeit oder eine Partikelanlagerung im Düsenkanal, ohne zu Drucken und auf einfache Weise erfasst werden kann.

In einer weiteren technisch vorteilhaften Ausführungsform des Verfahrens wird das Piezoelement über einen vorgegebenen Zeitraum angeregt. Dadurch wird beispielsweise der technische Vorteil erreicht, dass durch zeitliche Mittelung des Messsignals eine erhöhte Reproduzierbarkeit der Messung und auch mit geringerer Auflösung des Messystems eine aussagekräftige Messung erhalten wird. Das Piezoelement kann mit einem vorgegebenen Spannungsprofil angesteuert werden.

In einer weiteren technisch vorteilhaften Ausführungsform des Verfahrens umfasst die Folge von Spannungsprofilen eine vorgegebene Folge zueinander unterschiedlicher Spannungsprofile. Dadurch wird beispielsweise der technische Vorteil erreicht, dass ein charakteristischer Verlauf in Abhängigkeit unterschiedlicher Spannungsprofile erhalten wird, so dass eine erhöhte Sensitivität der Messung erreicht wird. Dadurch wird eine Charakterisierung unterschiedlicher Komponenten ermöglicht.

In einer weiteren technisch vorteilhaften Ausführungsform des Verfahrens nimmt eine Haltezeit, Anstiegszeit und/oder Abfallzeit der Spannungsprofile in der Folge zu oder ab. Dadurch wird beispielsweise der technische Vorteil erreicht, dass eine Druckflüssigkeit anhand einer Schallgeschwindigkeit oder anderer Parameter charakterisiert werden kann. Zudem lassen sich eine Viskosität oder Veränderung der Partikelkonzentration bestimmen.

In einer weiteren technisch vorteilhaften Ausführungsform des Verfahrens wird ein Verlauf des Stromflusses oder der Temperatur des Druckkopfes während des Ansteuerns erfasst. Dadurch wird beispielsweise der technische Vorteil erreicht, dass der erfasste Verlauf mit einem vorgegebenen Verlauf des Stromflusses oder der Temperatur verglichen werden kann. Durch den Energieeintrag der Piezoelemente kann eine temperaturbedingte Veränderung durch einen Temperatursensor oder durch eine temperaturbedingte Veränderung eine Durchflussrate erfasst werden.

In einer weiteren technisch vorteilhaften Ausführungsform des Verfahrens wird der erfasste Verlauf mit einem vorgespeicherten Verlauf verglichen. Dadurch wird beispielsweise der technische Vorteil erreicht, dass eine Abweichung ermittelt werden kann. Bei einer geringen Abweichung zu einem vorgespeicherten Verlauf kann auf eine Eigenschaft geschlossen werden, die dem vorgespeicherten Verlauf zugeordnet ist, wie beispielsweise eine Durchflussrate oder eine Alterung.

In einer weiteren technisch vorteilhaften Ausführungsform des Verfahrens wird die Art einer Druckflüssigkeit im Inneren des Druckkopfes auf Basis des Vergleiches bestimmt oder charakterisiert. Dadurch wird beispielsweise der technische Vorteil erreicht, dass ein Vorhandensein einer bestimmten Druckflüssigkeit festgestellt werden kann. Dadurch kann die Prozesssicherheit erhöht werden und überprüft werden, ob die gewünschte Flüssigkeit im System ist oder diese funktionsfähig ist.

In einer weiteren technisch vorteilhaften Ausführungsform des Verfahrens umfasst die Folge von Spannungsprofilen eine vorgegebene Folge zueinander gleicher Spannungsprofile. Dadurch wird beispielsweise der technische Vorteil erreicht, dass genauere Messergebnisse erhalten werden, da über eine Vielzahl von Spannungsprofilen gemittelt werden kann.

In einer weiteren technisch vorteilhaften Ausführungsform des Verfahrens wird ein Ablösen einer Düsenplatte erfasst, wenn der Stromfluss unter einen vorgegebenen Wert sinkt. Dadurch wird beispielsweise der technische Vorteil erreicht, dass eine Beschädigung der Druckvorrichtung erkannt werden kann, wie beispielsweise eine defekte Düsenplatte oder Mikrofluidik oder defekte Druckköpfe, die intern delaminiert sind.

In einer weiteren technisch vorteilhaften Ausführungsform des Verfahrens wird ein Verschleiß des Piezoelementes erfasst, wenn der erfasste Schallpegel oder der Stromfluss unter einen vorgegebenen Wert sinkt. Dadurch wird beispielsweise der technische Vorteil erreicht, dass eine Alterung des Druckkopfes erkannt werden kann.

In einer weiteren technisch vorteilhaften Ausführungsform des Verfahrens wird das Verfahren durchgeführt, wenn die Druckflüssigkeit im Druckkopf gewechselt wird. Dadurch wird beispielsweise der technische Vorteil erreicht, dass festgestellt werden kann, ob die neue Druckflüssigkeit vollständig im Druckkopf angekommen ist oder die vorgesehene Druckflüssigkeit eingefüllt wurde. Zudem kann eine Effizienzsteigerung realisiert werden.

In einer weiteren technisch vorteilhaften Ausführungsform des Verfahrens ist die Druckdüse während dem Verfahren geöffnet oder geschlossen. Dadurch wird beispielsweise der technische Vorteil erreicht, dass das Verfahren mit unterschiedlichen Öffnungsstellungen der Druckdüse durchgeführt werden kann.

In einer weiteren technisch vorteilhaften Ausführungsform des Verfahrens wird der Druckkopf durch eine Verschlussplatte abgedeckt. Dadurch wird beispielsweise der technische Vorteil erreicht, dass keine Druckflüssigkeit während des Verfahrens verloren wird.

Gemäß einem zweiten Aspekt wird die technische Aufgabe durch eine Druckvorrichtung gelöst, die ausgebildet ist, das Verfahren nach dem ersten Aspekt auszuführen. Durch die Druckvorrichtung werden die gleichen technischen Vorteile wie durch das Verfahren nach dem ersten Aspekt erreicht.

Ausführungsbeispiele der Erfindung sind in den Zeichnungen dargestellt und werden im Folgenden näher beschrieben.

Es zeigen:
- Fig. 1: eine schematische Querschnittsansicht eines steuerbaren Druckkopfes;
- Fig. 2: eine schematische Ansicht eines Spannungsprofils zum Ansteuern eines Piezoelements;
- Fig. 3: Verläufe des Stromflusses in Abhängigkeit von Spannungsprofilen für unterschiedliche Druckflüssigkeiten;
- Fig. 4: weitere Verläufe des Stromflusses in Abhängigkeit von Spannungsprofilen für unterschiedliche Druckflüssigkeiten;
- Fig. 5: Verläufe des Schallpegels in Abhängigkeit von Spannungsprofilen für unterschiedliche Durchflussraten;
- Fig. 6: eine schematische Ansicht einer Verschlussplatte für den Druckkopf; und
- Fig. 7: ein Blockdiagramm eines Verfahrens zum Analysieren eines Druckkopfes.

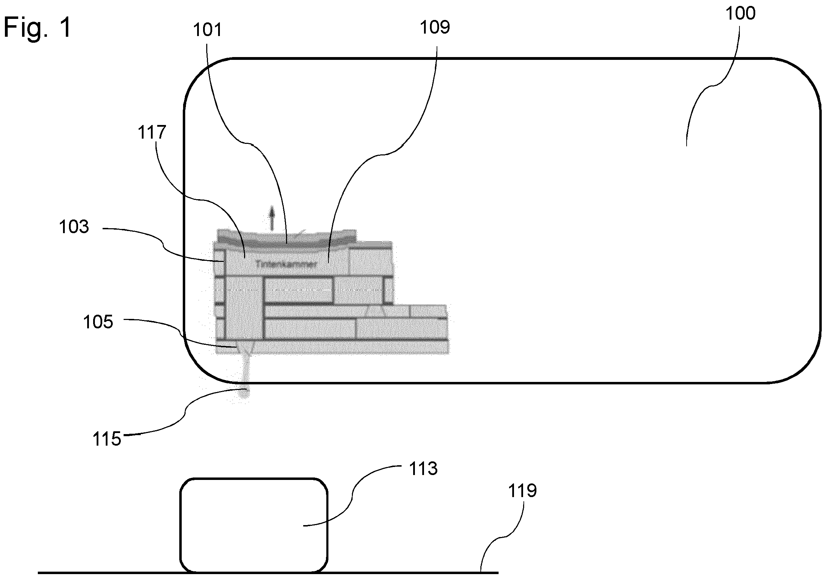

Fig. 1 zeigt eine schematische Querschnittsansicht eines steuerbaren Druckkopfes 103 einer Druckvorrichtung 100. Die Druckvorrichtung 100 verwendet einen Strahl von Flüssigkeitstropfen 115 für einen Druckprozess (Inkjet-Verfahren). Der Druckprozess kann ein zweidimensionaler Druckprozess zum Erzeugen von Bildern durch das Aufbringen von Tinte sein oder ein dreidimensionaler Druckprozess zum Erzeugen von räumlichen Objekten 113, die durch eine Druckflüssigkeit 109 erzeugt werden, die schichtweise auf einer Bauplattform 119 akkumuliert wird.

Für das Ausstoßen der Druckflüssigkeit 109 ist in dem Druckkopf 103 der Druckvorrichtung 100 zumindest ein Piezoelement 101 verbaut, das einen elektrischen Spannungsimpuls in eine Bewegung umsetzt und auf die Druckflüssigkeit 109 in der Tintenkammer 117 überträgt. Die Bewegung des Piezoelements 101 wird durch den inversen piezoelektrischen Effekt erreicht, der bewirkt, dass das Piezoelement 101 bei einer negativen Spannung eine Abwärtsbewegung (Fall) und bei einer positiven Spannung eine Aufwärtsbewegung (Rise) erzeugt.

Zum Ansteuern der Piezoelemente 101 wird ein Spannungsprofil verwendet, das verschiedene Abschnitte aufweist. Je nach Spannungsprofil und verwendeter Druckflüssigkeit 109 entstehen unterschiedlich ausgebildete Flüssigkeitstropfen 115.

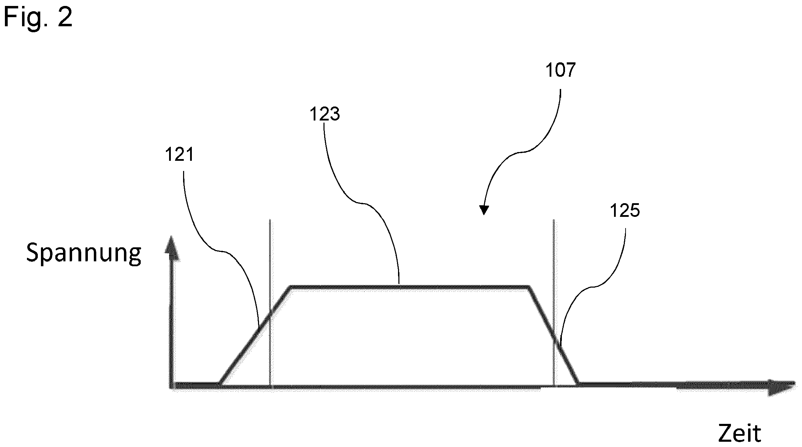

Fig. 2 zeigt eine schematische Ansicht eines trapezförmigen Spannungsprofils 107 zum Ansteuern des Piezoelements 101. Das Spannungsprofil 107 wird durch eine elektronische Steuereinheit mit einer elektrischen Schaltung erzeugt und kann als vorab vorgegebenes Spannungsprofil 107 in der Druckvorrichtung 100 abgelegt sein. Hierzu können die Daten des Spannungsprofils 107 digital in der Steuereinheit gespeichert und verändert werden. Die Steuereinheit kann auch eine Vielzahl von vorgegebenen Spannungsprofilen 107 speichern, von denen eines je nach verwendeter Druckflüssigkeit als Startpunkt für das Verfahren ausgewählt wird.

Das Spannungsprofil 107 umfasst drei Abschnitte, nämlich einen ersten Startabschnitt 121 mit einer Abfallzeit, in dem die elektrische Spannung ansteigt, einen zweiten Halteabschnitt 123 mit einer Wartezeit, in dem die elektrische Spannung konstant ist, und einen dritten Endabschnitt 125 mit einer Anstiegszeit, in dem die elektrische Spannung abfällt. Um eine geeignete Tropfenform zu erzeugen, werden die jeweiligen Abschnitte 121, 123 und 125 verändert.

Dabei werden die Abfallzeit (Fall Time), Wartezeit (Waiting Time) und Anstiegszeit (Rise Time) der jeweiligen Abschnitte 121, 123 und 125 verändert und angepasst. Da sich jede Druckflüssigkeit 109 rheologisch unterscheidet, sollte für jede Druckflüssigkeit 109 jeweils ein entsprechend angepasstes Spannungsprofil 107 für den Druckprozess verwendet werden. Wenn die Druckflüssigkeit Partikel umfasst, können auch der Füllgrad oder die Feststoffkonzentration bestimmt werden.

Die Abfallzeit (Fall Time) erzeugt eine Ziehbewegung (Pull) des Piezoelementes 103. Der Startabschnitt 121 setzt sich aus der Abfallzeit und einer Abfallspannung zusammen. Die Abfallspannung hat beispielsweise einen Einfluss auf die erzeugte Tropfengröße. Bei einer starken Veränderung der Abfallspannung sollte die Schallgeschwindigkeit der Druckflüssigkeit 109 nicht überschritten werden.

Die Wartezeit (Waiting Time) ist die Zeit bei einer konstanten Spannung im Halteabschnitt 123, in der die Druckflüssigkeit 109 relaxiert. Die Relaxation hängt mit der Schallgeschwindigkeit innerhalb der Druckflüssigkeit 109 zusammen. Das Ende der Wartezeit sollte möglichst genau mit der Relaxation der Druckflüssigkeit 109 in der Tintenkammer 117 des Druckkopfes 103 übereinstimmen, so dass zu diesem Zeitpunkt die Anstiegszeit synchron mit der Relaxationsbewegung beginnt. Bei einer optimalen synchronen Einstellung, wird so die geringste Energie benötigt, um danach einen Tropfen auszustoßen.

Die Anstiegszeit (Rise Time) im Endabschnitt 125 erzeugt eine Stoßbewegung (Push) des Piezoelements 101. Die von der Abfallzeit erzeugte Bewegung der Druckflüssigkeit 109 und die in der Wartezeit entstehende Relaxation der Druckflüssigkeit 109 wird während der Anstiegszeit zusätzlich beschleunigt, so dass ein Flüssigkeitstropfen 115 aus der Tintenkammer 117 durch die Druckdüse 105 entweicht.

Die Amplitudenhöhe ist die Höhe der elektrischen Spannung während der Wartezeit und korreliert mit der Größe des ausgestoßenen Flüssigkeitstropfens 115. Bei einem Abstimmen des Spannungsprofils 107 kann eine konstante vorgegebene Spannung als Amplitudenhöhe verwendet werden, die der Auslenkung des Piezoelements 101 entspricht.

Bei einem Abstimmen des Spannungsprofils 107 (Wave Tuning) werden unterschiedliche Spannungsprofile 107 mit unterschiedlicher Abfallzeit, Wartezeit, Anstiegszeit und Amplitudenhöhe erzeugt. Danach wird für die einzelnen Spannungsprofile 107 der elektrische Strom durch das Piezoelement 101 mit einem Amperemeter oder einer geeigneten elektrischen Schaltung bestimmt und über die Dauer des Spannungsprofils 107 gemittelt, beispielsweise durch Integrieren einzelner Stromwerte über die Zeit. Das Spannungsprofil 107 kann wiederholt mit einer Wiederholfrequenz auf das Piezoelement 101 angewendet werden, um während dieser Dauer den elektrischen Strom durch das Piezoelement 101 zu mitteln.

Statt dem elektrischen Strom durch das Piezoelement 101 kann auch die Schallamplitude verwendet werden, die durch das Piezoelement 101 erzeugt wird. Die so erfassten Werte für den elektrischen Strom oder die Schallamplitude werden anschließend für eine Auswahl eines der erzeugten Spannungsprofile 107 verwendet.

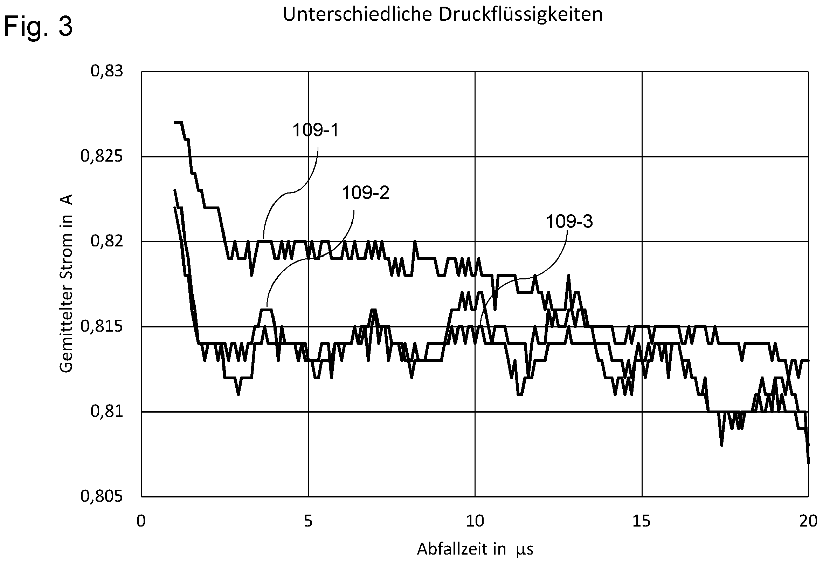

Fig. 3 zeigt Verläufe für unterschiedliche Druckflüssigkeiten 109-1, 109-2 und 109-3 innerhalb des Druckkopfes 103. Dabei ist ein mittlerer erfasster Stromwert bei variierender Abfallzeit des Spannungsprofils 107 aufgetragen. Die verwendeten Spannungsprofile 107 weisen eine konstante Wartezeit von 2.3 µs und eine konstante Anstiegszeit von 1 µs auf. Die Wiederholrate der Spannungsprofile beträgt 15 kHz. Die Spannungsprofile können auch in einer anderen bestimmten Frequenz wiederholt werden, die auch einstellbar ist.

Die Abfallzeit des Spannungsprofils 107 wird hingegen zwischen 1 µs und 20 µs verändert (X-Achse). Hierbei wird ein vorgegebenes Spannungsprofil verwendet, dessen Abfallzeit von dem Minimalwert in kleinen Schritten bis zu dem Maximalwert erhöht wird. Zu jeder Abfallzeit wird der jeweilige zugehörige mittlere Stromwert erfasst (Y-Achse), der durch das Piezoelement 101 fließt. Alternativ kann auch der Schallpegel mit einem Mikrofon ermittelt werden.

Jede der Druckflüssigkeiten 109-1, 109-2 und 109-3 weist einen anderen charakteristischen Verlauf auf. Wird beispielsweise der erfasste Verlauf für eine der Druckflüssigkeiten 109-1, 109-2 und 109-3 mit einem vorgespeicherten Verlauf für die Druckflüssigkeit 109-1, 109-2 und 109-3 verglichen, lässt sich bestimmen, welche Druckflüssigkeit sich im Druckkopf 103 befindet. Bei diesem Verfahren wird der Druckkopf 103 und dessen Druckdüsen 105 verschlossen. Somit ist es nicht möglich, dass die Druckflüssigkeit 109 durch die Druckdüsen 105 entweicht.

Durch das anschließende Ansteuern mit verschiedenen Spannungsprofilen 107 können mittels einer Strom- und Schallmessung viele Parameter ermittelt werden, beispielsweise der Druckflüssigkeit, des Drucksystems und des Zustandes des Druckkopfes. Mit geschlossenen Druckdüsen 105 und angeregten Piezoelementen 101 lassen sich jedoch auch andere Parameter der Druckflüssigkeit 109, der Fluideigenschaften oder ein Zustand des Druckkopfes ermitteln. Die Messung kann mit geschlossenen oder abgedeckten Druckdüsen 105 durchgeführt werden oder mit offenen Druckdüsen 105 während einem Drucken.

Bei geschlossenem Druckkopf ist der Vorteil, dass keine Tinte verschwendet wird.

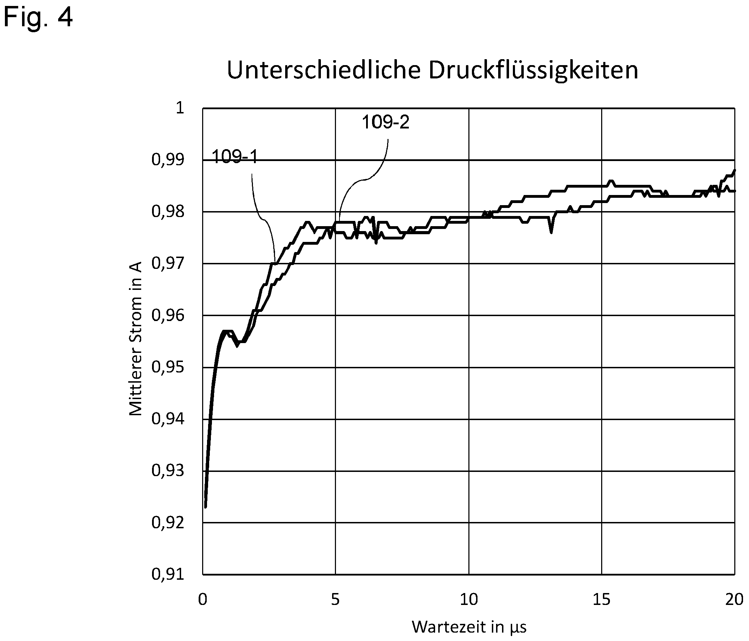

Fig. 4 zeigt weitere Verläufe für unterschiedliche Druckflüssigkeiten 109-1 und 109-2 innerhalb des Druckkopfes 103. Dabei ist ein mittlerer erfasster Stromwert für den Stromfluss bei variierender Wartezeit des Spannungsprofils 107 aufgetragen. Die verwendeten Spannungsprofile 107 weisen eine konstante Abfallzeit von 2.3 µs und eine konstante Anstiegszeit von 1 µs auf. Die Wiederholrate beträgt 20 kHz.

Die Wartezeit des Spannungsprofils 107 wird hingegen zwischen 1 µs und 20 µs verändert (X-Achse). Hierbei wird ein vorgegebenes Spannungsprofil 107 verwendet, dessen Wartezeit von dem Minimalwert in kleinen Schritten bis zu dem Maximalwert erhöht wird. Zu jeder Wartezeit wird der jeweilige zugehörige mittlere Stromwert für den Stromfluss erfasst (Y-Achse), der durch das Piezoelement 101 fließt. Alternativ kann auch der Schallpegel mit einem Mikrofon ermittelt werden.

Jede der Druckflüssigkeiten 109-1 und 109-2 weist einen anderen charakteristischen Verlauf auf. Wird beispielsweise der erfasste Verlauf für eine der Druckflüssigkeiten 109-1 und 109-2 mit einem vorgespeicherten Verlauf für die Druckflüssigkeit 109-1 oder 109-2 verglichen, lässt sich bestimmen, welche Druckflüssigkeit sich im Druckkopf 103 befindet. Bei diesem Verfahren wird der Druckkopf 103 und dessen Druckdüsen 105 verschlossen. Somit ist es nicht möglich, dass die Druckflüssigkeit 109 durch die Druckdüsen 105 entweicht.

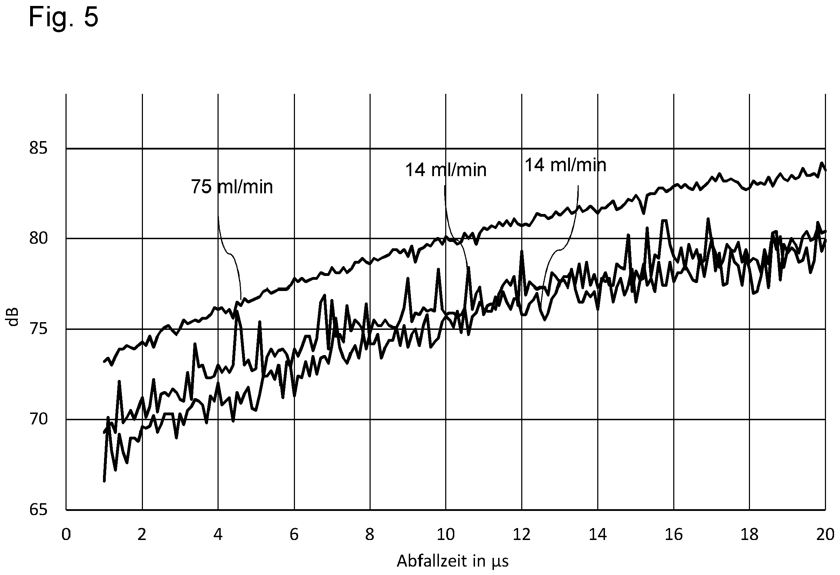

Fig. 5 zeigt einen Schallpegel in dB in Abhängigkeit einer variierenden Abfallzeit des Spannungsprofils 107 für unterschiedliche Durchflussraten. Die verwendeten Spannungsprofile 107 weisen eine konstante Wartezeit von 2.3 µs und eine konstante Anstiegszeit von 1 µs auf. Die Wiederholrate beträgt 15 kHz. Die Abfallzeit des Spannungsprofils 107 wird hingegen zwischen 1 µs und 20 µs verändert (X-Achse).

Die Druckflüssigkeit 109 fließt beispielsweise durch einen Zirkulationskopf, in dem die Druckflüssigkeit 109 kontinuierlich durch den Druckkopf 103 zirkuliert, auch wenn keine Druckflüssigkeit 109 ausgestoßen wird. Bei einer höheren Durchflussrate verringert sich die Lautstärke des angeregten Druckkopfes 103. Auf diese Weise lässt sich durch eine Messung eines Schallpegels die Durchflussrate der Druckflüssigkeit durch den Druckkopf 103 ermitteln. Durch eine akustische Messung des Schallpegels kann auch ein Nachlassen oder eine Alterung der Piezoelemente 101 erkannt und korrigiert werden.

Da sich der Druckkopf 103 durch das Ansteuern der Piezoelemente 101 zusätzlich erhitzt, kann die Durchflussrate der Druckflüssigkeit 109 ebenfalls durch die erfasste Temperatur oder den veränderten Stromfluss durch die Piezoelemente 101 erfasst werden. Die Temperatur kann durch einen intern verbauten Temperatursensor erfasst werden. Der Stromfluss kann durch ein Amperemeter oder eine geeignete elektrische Schaltung erfasst werden. Im Allgemeinen korreliert der Schallpegel mit dem Stromfluss durch die Piezoelemente 101 des Druckkopfes 103. Das heißt, dass bei höherem Stromfluss durch die Piezoelemente 101 auch der Schallpegel zunimmt. Auf diese Weise kann im Druckkopf 103 auch bei intern vernetzten, einzelnen Kanälen, einzelnen Düsen, einer Düsenreihe oder Tintenkammern der Durchfluss gemessen werden.

Wenn sich beispielsweise bei einem Ansteuern der Piezoelemente 101 über eine vorgegebene Zeit, wie beispielsweise 10 min, der Stromfluss verändert, bedeutet dies, dass der Durchfluss oder Temperatur gering ist. Durch die Erhitzung der Piezoelemente 101 verändert sich auch der Stoßflug oder die Energieaufnahme.

Mittels dieser Technik kann detailliert und punktuell die Durchflussrate durch den Druckkopf 103 ermittelt werden. Bei einer Verstopfung der internen Filter oder Kanäle kann mittels der Durchflussmessung ein Defekt lokalisiert werden. Durch das Ansteuern der Piezoelemente 101 durch ein Spannungsprofil 107 und eine Messung des Stromflusses können daher Rückschlüsse auf die Rheologie der Druckflüssigkeit 109 getroffen werden.

Einzelne Piezoelemente 101 innerhalb des Druckkopfes 103 können akustisch oder mittels Strommessung auf eine Funktionstauglichkeit geprüft werden. Bei einem Ausfall von Piezoelementen 101 sinkt der Stromfluss gegenüber einem Normalbetrieb. Zudem können Durchflussmessungen einzelner Druckkopfreihen innerhalb des Druckkopfes 103 durchgeführt werden.

Zudem sind zwischen verschiedenen Druckflüssigkeiten 109 Unterschiede in der Messung des Stromflusses durch die Piezoelemente 101 zu erkennen. Auf diese Weise ist es möglich, die Druckflüssigkeiten 109 rheologisch zu unterscheiden oder zu charakterisieren. Außerdem kann ein Rückschluss von der Druckflüssigkeit 109 auf die Elastizität gezogen werden.

Die Testmethode beruht darauf, dass durch den fehlenden Fluss der Druckflüssigkeit 109 keine Energieabgabe oder Energiefluss stattfindet, durch den sich die Komponenten erwärmen. Daraus resultiert die veränderte Stromaufnahme der Piezoelemente 101.

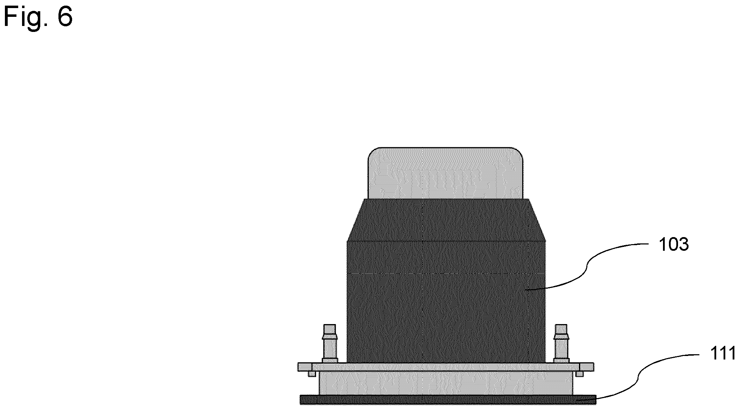

Fig. 6 zeigt eine schematische Ansicht einer Verschlussplatte 111 für den Druckkopf 103. Das Verfahren kann mit geöffneten oder verschlossenen Druckdüsen 105 durchgeführt werden. Zum Verschließen der Druckdüsen 105 kann eine Verschlussplatte 111 verwendet werden, die an dem Druckkopf 103 befestigt wird.

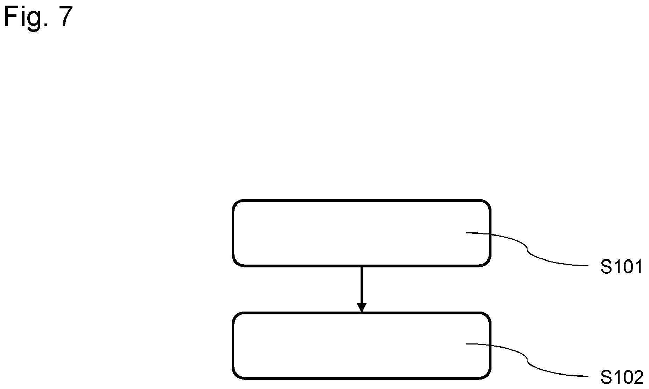

Fig. 7 zeigt ein Blockdiagramm eines Verfahrens zum Analysieren eines Druckkopfes 103. In Schritt S101 wird das Piezoelement 101 innerhalb des Druckkopfes 103 mit einer Folge von Spannungsprofilen 107 angesteuert. Dabei wird in Schritt S102 der Schallpegel, der Stromfluss und/oder die Temperatur des Druckkopfes 103 während des Ansteuerns erfasst und ausgewertet. Durch das Verfahren können Piezoelemente 101 und Druckdüsen 105 akustisch oder mittels einer Strommessung auf einen Durchfluss oder eine elektrische Unterbrechung hin geprüft werden. Das Verfahren bietet die einfache Möglichkeit, grundlegende Systemparameter zu ermitteln und die Druckflüssigkeit 109, den Druckkopf 103 und das Fluidsystem zu analysieren, zu charakterisieren oder zu überprüfen.

Durch das Verfahren ist es möglich, unterschiedliche Parameter aus der Druckvorrichtung 100 zu erhalten, um gegebenenfalls Gegenmaßnahmen zu ergreifen. Dies kann automatisiert in einem Zustand erfolgen, in dem der Druckkopf 103 abgedeckt ist. Dadurch lässt sich eine kostengünstigere Optimierung und Zeitersparnis erzielen. Es erfolgt eine effiziente und permanente Überwachung eines Drucksystems. Eine Fehlererfassung und Wartung werden erleichtert. Zudem besteht die Möglichkeit einer Ferndiagnose, einer Kostenersparnis bei der Herstellung der Druckvorrichtung 100 und einer höheren Prozesssicherheit.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Druckvorrichtung
- 101: Piezoelement
- 103: Druckkopf
- 105: Druckdüse
- 107: Spannungsprofil
- 109: Druckflüssigkeit
- 111: Verschlussplatte
- 113: Objekt
- 115: Flüssigkeitstropfen
- 117: Tintenkammer
- 119: Bauplattform
- 121: Startabschnitt
- 123: Halteabschnitt
- 125: Endabschnitt

## Patentansprüche

1. Verfahren zum Analysieren eines Druckkopfes (103), mit den Schritten:
- Ansteuern (S101) eines Piezoelementes (101) innerhalb des Druckkopfes (103) mit einer Folge von Spannungsprofilen (107); und
- Erfassen (S102) eines Schallpegels, eines Stromflusses, eines Widerstandes, einer Impedanz und/oder einer Temperatur des Druckkopfes (103) während des Ansteuerns.

2. Verfahren nach Anspruch 1, wobei eine Fehlfunktion der Druckdüse (105) erfasst wird, wenn der erfasste Schallpegel, der Stromfluss oder die Temperatur über einem vorgegebenen Wert liegt.

3. Verfahren nach einem der vorangehenden Ansprüche, wobei das Piezoelement (101) über einen vorgegebenen Zeitraum angeregt wird.

4. Verfahren nach einem der vorangehenden Ansprüche, wobei die Folge von Spannungsprofilen (107) eine vorgegebene Folge zueinander unterschiedlicher Spannungsprofile (107) umfasst.

5. Verfahren nach Anspruch 4, wobei eine Haltezeit, Anstiegszeit und/oder Abfallzeit der Spannungsprofile (107) in der Folge zunimmt oder abnimmt.

6. Verfahren nach einem der vorangehenden Ansprüche, wobei ein Verlauf des Stromflusses oder der Temperatur des Druckkopfes (103) während des Ansteuerns erfasst wird.

7. Verfahren nach Anspruch 6, wobei der erfasste Verlauf mit einem vorgespeicherten Verlauf verglichen wird.

8. Verfahren nach Anspruch 7, wobei die Art einer Druckflüssigkeit (109) im Inneren des Druckkopfes (103) auf Basis des Vergleiches bestimmt oder charakterisiert wird.

9. Verfahren nach einem der vorangehenden Ansprüche, wobei die Folge von Spannungsprofilen (107) eine vorgegebene Folge zueinander gleicher Spannungsprofile (107) umfasst.

10. Verfahren nach einem der vorangehenden Ansprüche, wobei ein Ablösen einer Düsenplatte (111) erfasst wird, wenn der Stromfluss unter einen vorgegebenen Wert sinkt.

11. Verfahren nach einem der vorangehenden Ansprüche, wobei ein Verschleiß des Piezoelementes (101) erfasst wird, wenn der erfasste Schallpegel oder der Stromfluss unter einen vorgegebenen Wert sinkt.

12. Verfahren nach einem der vorangehenden Ansprüche, wobei das Verfahren durchgeführt wird, wenn die Druckflüssigkeit (109) im Druckkopf (103) gewechselt wird.

13. Verfahren nach einem der vorangehenden Ansprüche, wobei die Druckdüse (105) während dem Verfahren geöffnet oder geschlossen ist.

14. Verfahren nach Anspruch 13, wobei der Druckkopf (107) durch eine Verschlussplatte (111) abgedeckt wird.

15. Druckvorrichtung (100), die ausgebildet ist, das Verfahren nach einem der Ansprüche 1 bis 14 auszuführen.
